# EUROPEAN PATENT APPLICATION

(11) **EP 4 459 212 A1**
(43) Date of publication of application: **06.11.2024**
(21) Application number: 22915215.2
(22) Date of filing: 30.12.2022
(51) Int. Cl.: F28D 1/053, C09D 183/04, F25B 1/00, C08F 2/50

(54) **HEAT EXCHANGER, THERMAL MANAGEMENT SYSTEM, COMPOSITE MATERIAL, AND PREPARATION METHOD THEREFOR**

(30) Priority: 30.12.2021 CN 202111657043; 30.12.2021 CN 202111657197
(71) Applicant: Zhejiang Sanhua Intelligent Controls CO., Ltd., Shaoxing, Zhejiang 312500 (CN)
(72) Inventor: XUE, Ming, Shaoxing, Zhejiang 312500 (CN); HUANG, Hai, Shaoxing, Zhejiang 312500 (CN); HUANG, Linjie, Shaoxing, Zhejiang 312500 (CN)
(74) Representative: Michalski Hüttermann & Partner Patentanwälte mbB
(86) International application number: PCT/CN2022/144129
(87) International publication number: WO 2023/125968

(57) **Abstract**

A heat exchanger has channels for fluid circulation. At least part of a surface of the heat exchanger is covered with a colored coating. The colored coating includes a color additive which is selected from at least one of an organic pigment, an inorganic pigment and a dye. A thermal management system, a composite material and preparation method of the composite material with the colored coating are disclosed.

## Description

### TECHNICAL FIELD

The present application relates to the field of heat exchange technology, and in particular to a heat exchanger and a thermal management system, as well as a composite material for the heat exchanger and a preparation method thereof.

### BACKGROUND

During the use of heat exchangers, it may be necessary to distinguish between different heat exchangers or different components of the heat exchanger, for example, when there are more than two heat exchangers in a same module of a thermal management system, and different heat exchangers are used to achieve different functions. Most of existing heat exchangers show colors of substrates thereof, or at most have subtle differences in size or shape, which are difficult to distinguish, causing inconvenience in installation, inspection or maintenance.

Besides, most of the composite materials used for surface coloring are designed for glass, ceramics, steel plates, etc., used under normal temperature or relatively constant temperature conditions, and the effect is not good when directly applied to a heat exchanger. The heat exchanger is a device that heats or cools an external environment through heat transfer between an internal fluid and the external environment. During the use of the heat exchanger, due to the temperature difference between the internal fluid and the external environment, a surface coating of the heat exchanger will undergo a process of alternating hot and cold conditions more frequently. Compared with the coating on the glass, the ceramic, the colored steel plate and other surface used at normal or constant temperatures, the coating applied to a surface of the heat exchanger requires stronger adhesion and durability, thereby reducing the risk of a color additive in the colored coating or the colored coating falling off as a whole. The adhesion and durability of the coating are greatly affected by the uniformity of dispersion of the color additive. Therefore, improvements on the dispersion uniformity of the color additive in the composite materials are needed.

### SUMMARY

The present invention aims to solve the above technical problems. Therefore, the present invention proposes a heat exchanger and a thermal management system, as well as a composite material for the heat exchanger and a preparation method thereof.

In a first aspect, the present application provides a heat exchanger having channels for fluid circulation, at least part of a surface of the heat exchanger being covered with a colored coating, the colored coating including a color additive which is selected from at least one of an organic pigment, an inorganic pigment and a dye.

At least part of the surface of the heat exchanger of the present application has the colored coating, which facilitates the distinction, installation, inspection or maintenance of different heat exchangers.

In a second aspect, the present application further provides a thermal management system including a compressor, a first heat exchanger, a throttling device and a second heat exchanger; a color of at least part of a surface of the first heat exchanger being different from a color of at least part of a surface of the second heat exchanger; when a refrigerant flows in the thermal management system, the refrigerant is compressed by the compressor and then flows into the first heat exchanger, the refrigerant flows into the throttling device after exchanging heat in the first heat exchanger, the refrigerant then flows into the second heat exchanger, and then flows into the compressor again after exchanging heat in the second heat exchanger.

The thermal management system of the present application is capable of distinguishing different heat exchangers by the color the surface of the heat exchanger, which facilitates the installation, inspection or maintenance of the heat exchangers in the thermal management system.

In a third aspect, the present application provides a composite material, including: 90 to 99 parts by mass of a sol and 1 to 10 parts by mass of a color additive; the sol including an alcoholic solvent; and a proportion of the alcohol solvent in the sol being 15% to 30%.

The composite material of the present application has 90 to 99 parts by mass of a sol and 1 to 10 parts by mass of a color additive, and the proportion of the alcohol solvent in the sol is 15% to 30%, so that the color additive is evenly dispersed.

In a fourth aspect, the present application further provides a preparation method of a composite material, including:
mixing 90 to 99 parts by mass of a sol and 1 to 10 parts by mass of a color additive; wherein the sol includes an alcohol solvent and a proportion of the alcohol solvent in the sol is 15% to 30%.

The preparation method of the present application is capable of preparing the composite material in which the color additive is evenly dispersed.

Additional aspects and advantages of the present application will be set forth in part in the description which follows, and in part will be obvious from the description, or may be learned by practice of the present application.

### BRIEF DESCRIPTION OF DRAWINGS

FIG. 1 is a schematic structural view of a heat exchanger in accordance with an embodiment of the present application;
FIG. 2 is a partial cross-sectional schematic view of a collecting pipe of the heat exchanger in accordance with an embodiment of the present application;
FIG. 3 is an enlarged view of area A in FIG. 1;
FIG. 4 is a schematic view of fins and heat exchange tubes of the heat exchanger in accordance with an embodiment of the present application;
FIG. 5 is a schematic view of an edge area and a middle area on an inner side of the heat exchange tube of the heat exchanger an edge area;
FIG. 6 is a schematic view of an outer edge area and a central area of an inner surface of the fin of the heat exchanger in accordance with an embodiment of the present application; and
FIG. 7 is a schematic view of a thermal management system in accordance with an embodiment of the present application.

### DETAILED DESCRIPTION

In order to make the purpose, technical solutions and advantages of the present application clearer, the technical solutions of the present application will be clearly and completely described below in conjunction with embodiments of the present application. Obviously, the described embodiments are part of the embodiments of the present application, but not all of the embodiments. Based on the technical solutions and embodiments provided in the present application, all other embodiments obtained by those skilled in the art without creative efforts fall within the protection scope of the present application. If specific conditions are not specified in the embodiments, the conditions should be carried out according to conventional conditions or conditions recommended by the manufacturer. If the manufacturer of the reagents or instruments used is not indicated, they are all conventional products that can be purchased commercially.

The endpoints of ranges and any values disclosed herein are not limited to the precise ranges or values. These ranges or values should be understood to include values approaching these ranges or values. For numerical ranges, the endpoint values of each range, the endpoint values of each range or individual point values, and the individual point values can be combined with each other to obtain one or more new numerical ranges.

It should be noted that the terms "and/or" or "/" used in the present application are only an association relationship describing related objects, indicating that three relationships can exist. For example, A and/or B can mean: A exists alone, A and B exist at the same time, and B exists alone. As used in the embodiments and the appended claims, the singular forms "a," "the" and "said" are intended to include the plural forms as well, unless the context clearly dictates otherwise.

In the description of the present application, the use of the terms "at least one of" or other similar terms to connect a list of items may mean any combination of the listed items. For example, items A and B are listed, then the phrase "at least one of A and B" means only A; only B; or A and B. In another example, if items A, B and C are listed, then the phrase "at least one of A, B and C" means only A; only B; only C; A and B (excluding C); A and C (excluding B); B and C (excluding A); or all of A, B and C. The item A may contain a single component or multiple components. The item B may contain a single component or multiple components. The item C may contain a single component or multiple components. Furthermore, the use of the terms "at least a portion of a surface", "at least part of a surface" or other similar terms means any portion of the surface or the entire surface of the component. For example, at least part of a surface of the heat exchanger refers to a certain part or parts of the surface of the heat exchanger, or the entire surface of the heat exchanger.

The present application will be described in further detail below through specific embodiments.

Currently, most research and development on heat exchanger coatings focuses on the protective effect of surface coatings on the heat exchangers. For example, by coating a surface of the heat exchanger with a hydrophilic or hydrophobic coating, it can reduce the condensation of condensed water on the surface of the heat exchanger and the frost on the surface of the heat exchanger, improve heat exchange efficiency, and alleviate corrosion and rust of heat exchange surface materials by moisture and impurities in the air. Alternatively, substances with antibacterial and antifungal effects can be added to the hydrophilic or hydrophobic coating so as to reduce the growth of bacteria and mold on the surface of the heat exchanger, therefore improving the heat exchange efficiency and user experience of the heat exchanger. However, related technologies rarely pay attention to surface coloring of the heat exchangers.

During the use of heat exchangers, it may be necessary to distinguish between different heat exchangers, for example, when there are more than two heat exchangers in a same module of a thermal management system, and different heat exchangers are used to achieve different functions. Most of existing heat exchangers show colors of substrates thereof, or at most have subtle differences in size or shape, which are difficult to distinguish, causing inconvenience in installation, inspection or maintenance.

Therefore, in a first aspect of the present application, it provides a heat exchanger having channels for fluid circulation. At least part of a surface of the heat exchanger is covered with a colored coating. The colored coating includes a color additive which is selected from at least one of an organic pigment, an inorganic pigment and a dye.

The heat exchanger of the present application has a colored coating on at least part of its surface so as to facilitate identification, installation, inspection or maintenance. In practical applications, different colors of coatings can be coated on the surfaces of different heat exchangers or different areas of the heat exchanger according to usage requirements to make it easy to distinguish them. Alternatively, different heat exchangers can be distinguished by different numbers, letters or markings by coating them with colored coatings. The coatings used to form numbers, letters or markings on different heat exchangers can be of the same or different colors. The color of the colored coating is achieved by adjusting the type and content of a pigment. In addition, the colored coating isolates the heat exchanger base from the external environment and reduces the corrosion of the heat exchanger by the external environment. Therefore, the durability of the heat exchanger in the present application is also improved to a certain extent.

In some embodiments, the heat exchanger includes a substrate, and at least a portion of a surface of the substrate is covered with a colored coating. That is to say, a surface of the heat exchanger is the surface of the substrate of the heat exchanger, and the colored coating is directly formed on the substrate of the heat exchanger. Of course, in other embodiments, there may be other coatings between the colored coating and the substrate of the heat exchanger. When there is another coating between the substrate of heat exchanger and the colored coating, at least part of the surface of the heat exchanger may refer to a surface of the another coating.

In some embodiments, a color additive is selected from at least one of C₁₈H₁₀Cₗ₂N₂O₂, C₃₂Cₗ₁₆CuN₈, C₃₂H₁₆CuN₈, C₃₅H₂₃Cₗ₂N₃O₂, C₁₂H₁₀N₆O₄, C₁₇H₁₃CaCₗN₄O₇S₂, and a mixture of mica, titanium dioxide, tin dioxide and ferric oxide. In other words, the color additive can be selected from any one of C₁₈H₁₀Cₗ₂N₂O₂ (pigment red), C₃₂Cₗ₁₆CuN₈ (green), C₃₂H₁₆CuN₈ (blue), C₃₅H₂₃Cₗ₂N₃O₂ (purple), C₁₂H₁₀N₆O₄ (orange), C₁₇H₁₃CaC₁N₄O₇S₂ (yellow), or the mixture (gold color) of the mica, the titanium dioxide, the tin dioxide and the ferric oxide; or a mixture of any two or more in any proportion. In the actual coloring process, the demand for the color of the colored coating may be diverse. The formulation of some colors may require only one organic pigment, inorganic pigment or dye, while the formulation of other colors may require more than two organic pigments, more than two inorganic pigments or more than two dyes, or a combination of the organic pigments, the inorganic pigments and the dyes.

In some embodiments, the color additive has a particle size of 1 µm to 5 µm. The smaller the particle size of the color additive, the more uniform and delicate the colored coating is, and the colored coating formed on the surface of the heat exchanger is beautiful. Moreover, the small particle size of the color additive is beneficial to the firm adhesion of the color additive on the surface of the heat exchanger.

In some embodiments, a thickness of the colored coating is 8 µm to 16 µm. Furthermore, an average thickness of the colored coating is 10 µm to 11 µm. Since the thickness of coating is thin, it will not have a major impact on the heat exchange efficiency of the heat exchanger.

In some embodiments, the colored coating has a thickness standard deviation of less than 0.8 µm. A film thickness of the colored coating is uniform, which makes the adhesion of the colored coating to the surface of the heat exchanger have good consistency, reducing partial peeling of the color additive and the colored coating.

In some embodiments, the colored coating includes silica. A surface of at least part of the silica is combined with a functional group -(CH₂)₃-O-CH₂-CH-OCH₂ and a hydroxyl group - OH. The addition of silica can increase the adhesion and density of the coating, and silica is widely available and cheap. The surface functional group -(CH₂)₃-O-CH₂-CH-OCH₂ makes the silica nanoparticles evenly dispersed in the sol. The silica nanoparticles in the resulting coating are also evenly dispersed, thereby improving the uniformity and consistency of the coating. The hydroxyl group -OH makes the silica nanoparticles hydrophilic, thus making the colored coating hydrophilic, allowing water on the coating surface to drain easily and reducing the accumulation of large amounts of water on the coating surface. It can reduce the corrosion of impurities in the water on the coating, so that the coating can maintain strong adhesion to the substrate for a long time. In some embodiments, at least part of the silica has a particle size of 55 nm to 65 nm.

In some embodiments, the colored coating further includes titanium dioxide which is hydrophilic and photocatalytically active. The titanium dioxide and the silicon dioxide form a binary oxide system so as to enhance the hydrophilicity and self-cleaning properties of the coating. In some embodiments, at least part of the titanium dioxide has a particle size of 5 nm to 10 nm.

For scenarios with only one heat exchanger, the colored coatings of the same or different colors can be covered at different positions of the heat exchanger.

In some embodiments, the colored coating includes a first colored coating and a second colored coating. The first colored coating and the second colored coating are respectively covered at different positions on a surface of the heat exchanger. The first colored coating and the second colored coating have different colors. In this way, different positions of the heat exchanger, or different components of the heat exchanger can be distinguished by the colored coating. For example, the heat exchanger includes a collecting pipe and a heat exchange tube. The collecting pipe is covered with a first colored coating, and the heat exchange tube is covered with a second colored coating. The first colored coating and the second colored coating have different colors. In this way, the collecting pipe and the heat exchange tube can be easily distinguished by the first colored coating and the second colored coating. Alternatively, the heat exchanger has a first channel for circulating a first fluid and second channel for circulating a second fluid. An outer surface of a structure forming the first channel is covered with a first colored coating, and an outer surface of a structure forming the second channel is covered with a second colored coating. The first colored coating and the second colored coating have different colors. In this way, the first channel and the second channel can be easily distinguished by the first colored coating and the second colored coating.

Different colors may be completely different or partially different. Different colors may be different types of colors, for example, red, green and blue; or may be different shades of colors, for example, dark red and light red; or may be different color gradient, for example, a color gradually becomes darker from a periphery to an interior, and a color gradually becomes lighter from the interior to the periphery; or may otherwise appear different in color.

In some embodiments of the present application, the heat exchanger includes a collecting pipe, a fin and a plurality of heat exchange tubes. The heat exchange tubes are fixed to the collecting pipe. An inner cavity of the heat exchange tube is in communication with an inner cavity of the collecting pipe. The fin is located between two adjacent heat exchange tubes. The colored coating covers at least part of a surface of at least one of the collecting pipe, the fin and the heat exchange tube. In this way, different heat exchangers can be distinguished based on a surface color of at least one of the collecting pipe, the fin and the heat exchange tube.

An exemplary description of the heat exchanger of the present application is given below.

Micro-channel heat exchanger is a high-efficiency heat exchange equipment developed in the 1990s and can be widely used in fields such as chemical industry, energy and environment. The micro-channel heat exchanger has many characteristics that are different from conventional scale equipment, such as small size, light weight, high efficiency and high strength, etc. Micro-channel technology has also triggered technological innovations to improve efficiency and reduce emissions in the fields of new energy vehicle thermal management systems, household air conditioners, commercial air conditioners and refrigeration equipment.

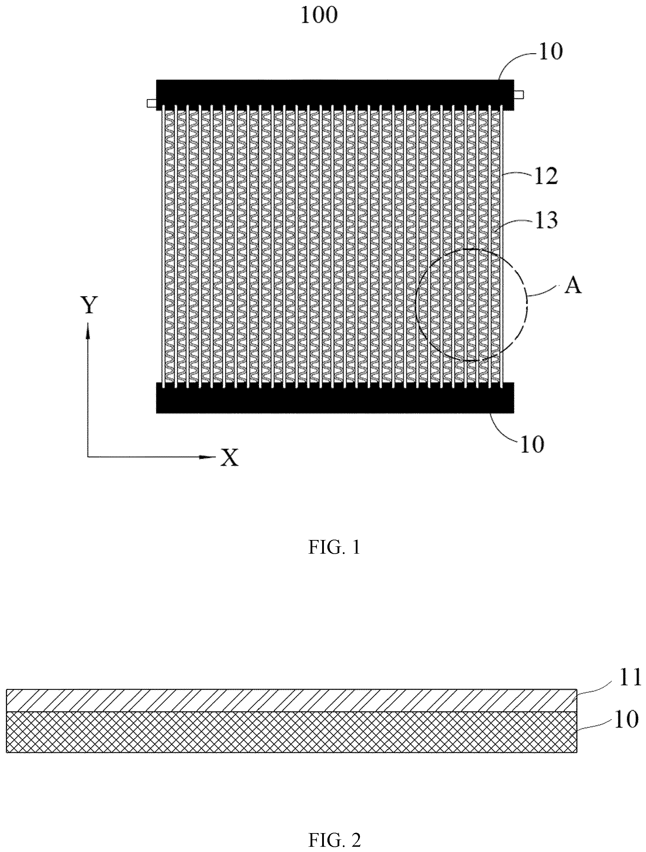

For example, as shown in FIG. 1, a main structure of the micro-channel heat exchanger 100 includes two collecting pipes 10, a plurality of heat exchange tubes 12 and at least one fin 13. The heat exchange tubes 12 are fixed to the collecting pipes 10. An inner cavity of the heat exchange tube 12 is in communication with an inner cavity of the collecting pipe 10. The plurality of heat exchange tubes 12 are disposed along a length direction/an axial direction (X direction) of the collecting pipe 10. One end of the heat exchange tube 12 in a length direction (Y direction) is connected to one of the two collecting pipes 10, and the other end of the heat exchange tube 12 in the length direction is connected to a remaining one of the two collecting pipes 10. The two adjacent heat exchange tubes and the collecting pipes together form an external channel for external fluid circulation. The inner cavity of the heat exchange tube 12 has a plurality of internal fluid channels extending along the length direction of the heat exchange tube 12. The heat exchange tube 12 may be a micro-channel flat tube or an elliptical tube. The fin 13 is located between two adjacent heat exchange tubes 12. The fin 13 is corrugated along the length direction of the heat exchange tube 12. The fin 13 includes a plurality of crest portions and a plurality of trough portions. The crest portions and the trough portions of the fin 13 are connected to two adjacent heat exchange tubes, respectively. In some embodiments, a window structure can be provided in some areas of the fin 13 to form a louver-type fin so as to further enhance heat exchange. In some embodiments, the micro-channel heat exchanger is an all-aluminum micro-channel heat exchanger. The structure of the micro-channel heat exchanger and the connection relationship of each component are common knowledge in the art, which will not be described again here.

In the present application, at least part of a surface of the collecting pipe 10, the heat exchange tube 12 and the fin 13 of the heat exchanger 100 is covered with a colored coating 11. FIG. 1 illustrates a surface of the collecting pipe 10 covered with the colored coating 11, and a partial cross-sectional view of the collecting pipe is shown in FIG. 2.

In some embodiments, the colored coating covering at least part of the surface of at least one of the collecting pipe, the fin and the heat exchange tube has an average thickness, and a thickness of at least part of the colored coating covering at least part of the surface of the fin is less than the average thickness; and/or, a thickness of at least part of the colored coating covering at least part of the surface of the heat exchange tube is less than the average thickness.

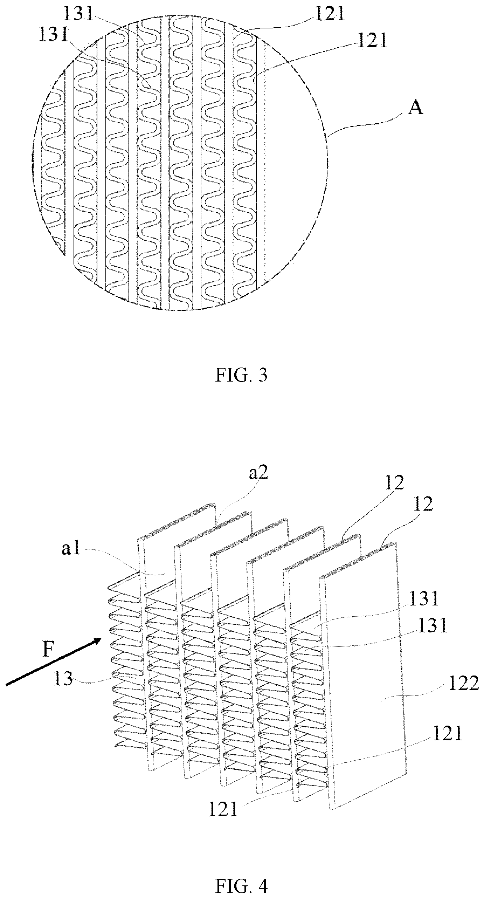

The colored coating on the heat exchanger of the present application is different from a hydrophilic coating, a hydrophobic coating and an antibacterial coating, etc., that need to improve the performance of the entire outer surface of the heat exchanger. The colored coating is applied to the surface of the heat exchanger to facilitate the identification of the heat exchanger. Therefore, in some solutions, on some surfaces of the heat exchanger, such as shown in FIGS. 4, 5 and 6, the heat exchange tube is used to form an inner side 121 of the external channel, and the fin is used to cooperate with the heat exchange tube to form an inner surface 131 of the external channel, etc. The colored coating does not need to be fully covered, and the thickness of the colored coating does not need to be limited. On the one hand, the application of the colored coating on it does not change the appearance color of the heat exchanger much, because a space formed between the two heat exchange tubes and a space formed between the heat exchange tube and the fin are small, it is difficult for light to reach the spaces, resulting in a certain visual blind zone. In the visual blind zone, it is difficult to distinguish the color of the surface of the heat exchanger from its appearance. On the other hand, the application of the colored coating on the inner surface of the heat exchanger may affect the heat exchange effect.

In some embodiments, the channels of the heat exchanger include an external channel for external fluid circulation. The heat exchange tube has an inner side for forming the external channel. The inner side has an edge area and a middle area. The external channel has a fluid inlet and a fluid outlet. The edge area includes a first edge area closer to the fluid inlet relative to the middle area, and a second edge area closer to the fluid outlet relative to the middle area. The middle area is located between the first edge area and the second edge area. A thickness of the colored coating covering the first edge area and the second edge area is greater than or equal to a thickness of the colored coating covering the middle area. In some embodiments, neither the edge area nor the middle area on the inner side of the heat exchange tube is covered with a colored coating.

In some embodiments, the heat exchanger has an internal channel for circulating an internal fluid such as a refrigerant or a coolant, etc., and an external channel for circulating an external fluid such as a secondary refrigerant, like air. The above-mentioned external fluid is relative to the refrigerant or the coolant, etc., circulating in the internal channel. In fact, it is best if the inner side of the heat exchange tube is not coated with a colored coating. In this case, it is necessary to shield the surface of the heat exchange tube when spraying. However, in the process of spraying the heat exchanger, in order to simplify the process and reduce the processing cost, the inner side of the heat exchange tube may not be shielded, but sprayed directly. In this way, the composite material will inevitably be sprayed on some areas of the inner side of the heat exchange tube. When spraying, the spraying direction can be made at a certain angle with the inner side of the heat exchange tube so as to reduce the area or thickness of the colored coating covering the inner side of the heat exchange tube, thereby minimizing the decrease in the heat exchange efficiency of the heat exchanger caused by the colored coating without affecting the color of the surface of the heat exchanger.

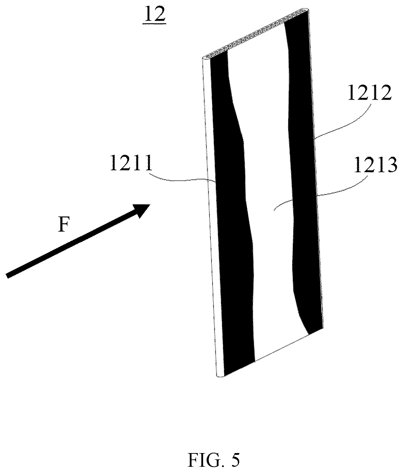

Illustratively, as shown in FIGS. 3, 4 and 5, the heat exchange tube has an inner side 121 for forming the external channel. In contrast, some heat exchange tube has an outer side 122. Generally, for the heat exchange tubes arranged in an array on the collecting pipe, only the two heat exchange tubes located at the beginning and the end of the array have the outer sides. Along a fluid flow direction F, the inner side 121 has a first edge area 1211 closer to a fluid inlet a1 relative to a middle area 1213 and a second edge area 1212 closer to a fluid outlet a2 relative to the middle area 1213. The middle area 1213 is located between the first edge area 1211 and the second edge area 1212. A thickness of the colored coating covering the first edge area 1211 and the second edge area 1212 is both greater than a thickness of the colored coating covering the middle area 1213. In some embodiments, the edge area and the middle area may have regular shapes, such as rectangles, or squares, etc.; or the edge area and the middle area may have irregular shapes, for example, as shown in FIG. 5. In some embodiments, the thickness of the colored coating on the inner side is less than 8 µm.

In some embodiments, the channels of the heat exchanger include an external channel for external fluid circulation. The fin has an inner surface for forming the external channel. The inner surface has an outer edge area and a central area. The external channel has a fluid inlet and a fluid outlet. The outer edge area includes a first outer edge area closer to the fluid inlet relative to the central area, and a second outer edge area closer to the fluid outlet relative to the central area. The central area is located between the first outer edge area and the second outer edge area. A thickness of the colored coating covering the first outer edge area and the second outer edge area is both greater than or equal to a thickness of the colored coating covering the central area. In some embodiments, neither the outer edge area nor the central area of the inner surface of the fin is covered with a colored coating.

In fact, it is best if the inner surface of the fin is not coated with a colored coating. In this case, the fin surface needs to be shielded. However, in the process of spraying the heat exchanger, in order to simplify the process and reduce costs, the inner surface of the fin may not be shielded, but sprayed directly. In this way, the composite material will inevitably be sprayed on some surface of the fin. When spraying, the spraying direction can be at a certain angle with the inner surface of the fin so as to reduce the area or thickness of the colored coating on the fin, thereby minimizing the decrease in the heat exchange efficiency of the heat exchanger caused by the colored coating without affecting the color of the surface of the heat exchanger.

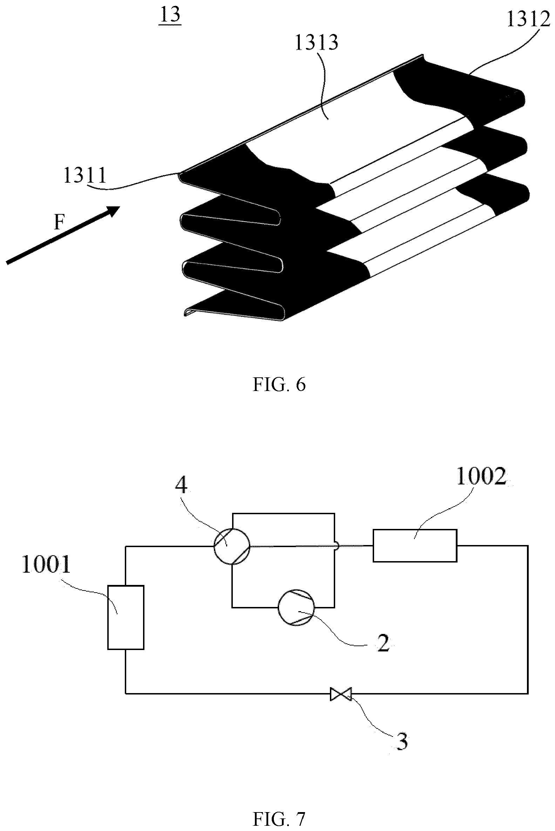

Exemplarily, as shown in FIGS. 3, 4 and 6, the fin has an inner surface 131 having an outer edge area and a central area along the fluid flow direction F. The outer edge area includes a first outer edge area 1311 closer to a fluid inlet a1 relative to the central area 1313, and a second outer edge area 1312 closer to a fluid outlet a2 relative to the central area 1313. The central area 1313 is located between the first outer edge area 1311 and the second outer edge area 1312. A thickness of the colored coating covering the first outer edge area 1311 and the second outer edge area 1312 is both greater than a thickness of the colored coating covering the central area 1313. In some embodiments, the outer edge area and the central area may have regular shapes, such as rectangles, or squares, etc., or the outer edge area and the central area may have irregular shapes, such as shown in FIG. 6.

In some embodiments, the thickness of the colored coating on the inner surface of the fin is less than 8 µm.

In a second aspect of the present application, it provides a preparation method of a heat exchanger. The preparation method includes:
providing a composite material which includes sol and a color additive;
coating and curing the composite material so as to form a colored coating on at least a portion of a surface of the heat exchanger.

In some embodiments, a preparation method of a heat exchanger includes:
providing a composite material which includes sol and a color additive;
providing a heat exchanger which includes a substrate; and
coating and curing the composite material on at least a portion of a surface of the substrate to form a colored coating on at least the portion of the surface of the substrate.

In some embodiments of the present application, the method of coating the heat exchanger with the composite material includes but is not limited to at least one of dipping, spraying, brushing, shower coating and roller coating.

In some embodiments, the composite material is coated on the surface of the heat exchanger by spraying. The coating of colored coating on the surface of the heat exchanger is for the purpose of coloring the surface of the heat exchanger, which is different from the hydrophilic coating, the hydrophobic coating and the antibacterial coating that need to be coated on the entire outer surface of the heat exchanger. The purpose of coloring can be achieved by applying the colored coating on an outer surface of the heat exchanger and an area that can be reached by sight. The outer surface refers to a surface exposed to the external environment. For the micro-channel heat exchanger, the outer surface of the heat exchanger includes surfaces of components such as the collecting pipe, the heat exchange tube and the fin that can be in contact with external heat exchange media, such as air. However, some area on the outer surface of the heat exchanger, such as the inner side of the heat exchange tube and the inner surface of the fin, are difficult to reach due to external light, forming a visual blind zone, making it difficult to distinguish the color of the surface. Therefore, it is better to apply no coating or less coating on it. The spraying method can select the spraying area on the outer surface of the heat exchanger, so as to achieve no coating or less coating on the inner side of the heat exchange tube and the inner surface of the fin.

In some embodiments, the spraying direction is parallel to at least part of a surface of the heat exchange tube, and/or the spraying direction is parallel to at least part of a surface of the fin. In this way, when spraying, the surface of the fin/heat exchange tube parallel to the spraying direction is not easily sprayed with the composite material, so it is not easy to form a colored coating. Therefore, it is convenient to achieve no coating or less coating on the inner side of the heat exchange tube and the inner surface of the fin. In some embodiments, the spraying direction is parallel to at least part of the inner side of the heat exchange tube, and/or the spraying direction is parallel to at least part of the inner surface of the fin.

In some embodiments, the spraying direction is perpendicular to a windward side of the heat exchanger. The external environment exchanges heat with the fluid (for example, a refrigerant or a coolant, etc.) in the heat exchanger through a heat-carrying medium (for example, air). When the external heat-carrying medium passes through the heat exchanger, the surface that first contacts the external heat-carrying medium is the windward side of the heat exchanger.

The curing method can be, for example, drying in an oven. In some embodiments, the curing temperature is 180°C to 220°C. Furthermore, the curing temperature is 190°C to 210°C. Furthermore, the curing temperature is 200°C. In some embodiments, the curing time is 5 minutes to 75 minutes. Furthermore, the curing time is 10 minutes to 60 minutes.

In some embodiments, a preparation method of a heat exchanger includes: performing surface pretreatment on the substrate of the heat exchanger before coating the composite material. Specifically, in some embodiments, the surface pretreatment specifically includes: sandblasting a surface of the substrate of the heat exchanger with 100 to 200 mesh, then cleaning the surface of the heat exchanger with alcohol or acid, and then air drying or drying at 35°C to 50°C. Sandblasting can increase the roughness of the surface of the substrate of the heat exchanger, thereby making the colored coating adhere more firmly to the surface of the substrate of the heat exchanger. In some embodiments, the sandblasting mesh is 120 to 180 mesh, for example the sandblasting mesh is 150 mesh. In some embodiments, the drying temperature is 40°C. The cleaning method used may be, for example, absolute ethanol ultrasonic cleaning or spray cleaning, or acid etching cleaning.

In a third aspect of the present application, it provides a thermal management system. The thermal management system includes a compressor 2, a first heat exchanger 1001, a throttling device 3 and a second heat exchanger 1002. A color of a surface of the first heat exchanger 1001 is different from a color of a surface of the second heat exchanger 1002. When a refrigerant flows in the thermal management system, the refrigerant flows into the first heat exchanger 1001 after being compressed by the compressor 2. The refrigerant then flows into the throttling device 3 after exchanging heat in the first heat exchanger 1001. Then, the refrigerant flows into the second heat exchanger 1002 and flows into the compressor 2 again after exchanging heat in the second heat exchanger 1002, as shown in FIG. 7. Because the surfaces of the first heat exchanger 1001 and the second heat exchanger 1002 have different colors, for example, the surface of the first heat exchanger is colored red and the surface of the second heat exchanger is colored green, so that the first heat exchanger and the second heat exchanger can be easily distinguished. In some embodiments, the first heat exchanger 1001 is a condenser, and the second heat exchanger 1002 is an evaporator. In some embodiments, a reversing device 4 is further provided in the thermal management system.

In some embodiments, at least part of the surface of one of the first heat exchanger 1001 and the second heat exchanger 1002 is covered with a colored coating. The color of the colored coating is different from the color of the substrate of the first heat exchanger 1001 and the color of the substrate of the second heat exchanger 1002. Alternatively, at least part of the surface of the first heat exchanger 1001 is covered with a third colored coating; at least part of the surface of the second heat exchanger 1002 is covered with a fourth colored coating; and the color of the third colored coating is different from the color of the fourth colored coating. In this way, by covering one of the two heat exchangers with the colored coating, the first heat exchanger and the second heat exchanger are distinguished by the difference in color between the colored coating and the substrate of the heat exchanger. Alternatively, by covering the surfaces of the two heat exchangers with different colored coatings, the first heat exchanger and the second heat exchanger are distinguished by the colored coatings of different colors.

For heat exchanger surface coloring technology, TCP technology can provide obvious coating color changes, such as silver, blue or purple, by adding commercially available color additives. However, studies in recent years have found trace amounts of hexavalent chromium components in TCP. Cr⁶⁺ is very harmful to the health of operators. The EU RoHS environmental protection organization has completely banned the commercial application of hexavalent chromium conversion coatings in 2017, and research and development of relevant alternative processes is needed.

Therefore, the present application uses a composite material to form the colored coating on the surface of the heat exchanger. Compared with TCP coloring technology, the use of the composite material to color the surface of the heat exchanger is green and environmentally friendly, which greatly reduces the threat to the health of operators and users.

The composite material used to form the colored coating on the surface of the heat exchanger can be commercially available or homemade. However, in some composite materials, the sol components, the ratio of sol and color additives, etc., thereof are mostly designed for substrates such as glass, ceramics, and steel plates used at normal or constant temperatures, and cannot be directly applied to a surface of a heat exchanger, or the effect applied to the surface of the heat exchanger is not good. The heat exchanger is a device that heats or cools the external environment through heat exchange between an internal fluid and the external environment. During the use of the heat exchanger, due to the temperature difference between the internal fluid and the external environment, the surface coating of the heat exchanger will undergo a process of alternating hot and cold conditions more frequently. Compared with coatings on the glass, the ceramics, the colored steel plates and other surfaces used at normal or constant temperatures, the coating applied to the surface of heat exchanger requires stronger adhesion and durability, thereby reducing the shedding of color additives in the colored coating or the overall colored coating.

Therefore, in a fourth aspect of the present application, it provides a composite material. The composite material is capable of forming a colored coating with strong adhesion and good durability on a surface of a heat exchanger. The composite material includes sol and a color additive. The sol includes an alcoholic solvent.

For some composite materials, after the colored coating is formed, the color additive or part of the colored coating falls off not because the adhesion of the adhesive is not strong enough, but because the dispersion of the color additive is not good. This causes some of the color additives in the composite to agglomerate and form an aggregate. After the composite material forms the colored coating, the outer surface of the color additive aggregate can fully contact the adhesive substance. However, the color additive inside the aggregate cannot fully contact or even be isolated from the adhesive substance, resulting in the combination of the color additive aggregate and the substrate mainly relying on the adhesive substance bonded to its outer surface. However, relative to the weight and volume of the entire color additive aggregate, this part of the adhesive material is not sufficient to permanently attach the color additive aggregate to the substrate. After being used for a period of time, this part of the color additive aggregate will fall off, and even drive the adhesive substances in the coating, causing the entire coating to fall off from the substrate. This results in spots with peeling marks on the colored coating, affecting the appearance of the product. In other cases, the color additive agglomerate can make the thickness of the coating uneven, resulting in a bumpy coating surface, even if they are able to adhere to the substrate with an adhesive substance. On the one hand, it affects the appearance of the product. On the other hand, the uneven surface makes the coating easy to adhere to impurities in external water or air. These impurities cause corrosion to the coating and affect the service life of the coating.

The composite material of the present application includes sol and a color additive. The composite material can form a colored coating on the surface of the substrate. In the process of forming the colored coating on the composite material, the sol forms a sticky substance that firmly attaches the color additive to the substrate. The alcohol solvent in the sol enables the color additive to be evenly dispersed in the sol, thereby enabling the color additive to be evenly distributed in the colored coating and reducing the agglomeration of the color additive in some area of the coating. The consistency of the binding force between the color additive and the adhesive substance is improved, as well as the consistency of the coating's adhesion to the substrate surface, thereby making the thickness, unit weight and adhesion of the colored coating also have good consistency. It reduces the peeling off of some color additive or coating from the substrate surface due to weak bonding or adhesion, which results in a colored coating on the surface of the substrate that can provide long-lasting decoration and protection.

In some embodiments, the alcoholic solvent is derived from the sol, and/or the alcoholic solvent is an additional added solvent. The alcoholic solvent derived from the sol means that at least part of the sol uses an alcoholic solvent during the preparation process; and/or, the sol generates an alcoholic solvent through chemical reactions or other types of reactions during the preparation process. After the sol is prepared, the alcoholic solvent remains at least partially in the sol. The alcoholic solvent is an additional added solvent. For example, the alcoholic solvent can be mixed into the sol as long as the colloidal structure of the sol is not destroyed. In some embodiments, the sol includes alcohol-based sol, and colloidal particles in alcohol-based sol are dispersed in the alcoholic solvent.

In some embodiments, the alcohol solvent includes an alcohol compound with 1 to 10 carbon atoms, preferably an alcohol compound with 1 to 8 carbon atoms, and more preferably an alcohol compound with 1 to 4 carbon atoms. In some embodiments, the alcoholic solvent can be any one of methanol, ethanol, isopropyl alcohol, benzyl alcohol and ethylene glycol, or a mixture of any two or more in any proportion.

In some embodiments, in terms of parts by mass, the composite material includes 90 to 99 parts of sol and 1 to 10 parts of the color additive, and the proportion of alcohol solvent in the sol is 15% to 30%.

In the present application, unless otherwise stated, the percentages, ratios or parts referred to are by mass. Among them, "part by mass" refers to the basic unit of measurement for the mass proportion relationship of a plurality of components. One part can represent any unit mass. For example, One part can represent 1g, 1.68g, or 5g, etc.

According to the embodiment of the present application, the composite material includes 90 to 99 parts of sol, for example, typical but non-limiting examples may be 90.1 parts, 90.2 parts, 90.5 parts, 91 parts, 93 parts, 95 parts, 97.5 parts, 98.8 parts and any value in a range formed by any two of these point values.

According to the embodiment of the present application, the composite material includes 1 to 10 parts of color additives, for example, typical but non-limiting examples may be 1.1 parts, 1.5 parts, 2 parts, 3 parts, 5 parts, 5.6 parts, 6.1 parts, 7 parts, 8 parts, 9 parts, 9.2 parts, 9.9 parts, and any value in a range formed by any two of these point values. 1~10 parts of color additives can be 1~10 parts of organic pigments, or 1~10 parts of inorganic pigments, or 1 to 10 parts of color additives having organic pigments, inorganic pigments and dyes in any proportion.

According to the embodiment of the present application, the proportion of the alcohol solvent in the sol is a proportion of parts. For example, if the alcohol solvent is 10 parts and the total sol is 100 parts, then the proportion of the alcohol solvent in the sol is 10%. For example, when the sol only includes the alcohol-based sol, the proportion of the alcohol solvent in the sol refers to the proportion of the alcohol solvent in the alcohol-based sol. When the sol includes not only the alcohol-based sol but also other sols, the proportion of the alcoholic solvent in the sol refers to the proportion of the alcoholic solvent in the total amount of the sol. For example, when the sol includes the alcohol-based sol and a water-based sol, the proportion of the alcohol solvent in the sol refers to the proportion of the alcohol solvent in a mixed sol composed of the alcohol-based sol and the water-based sol.

The content of the color additive determines the color concentration of the composite material and also determines the color depth of a final colored coating. If there is too few color additive, the coating will not change the color of the substrate surface significantly, and it will take multiple coats to get the desired coating color, or the desired coating color cannot be obtained at all. However, if there is too much color additive, it may cause poor dispersion in the sol, thereby affecting the overall performance of the coating. Alcohol solvents can improve pigment dispersion. Generally speaking, the higher the alcohol solvent content, the better the pigment dispersion in the sol. The more color additive there is, the more alcohol solvent is needed to ensure the dispersion of the pigment in the sol. However, when the composite material of the present application is used to form a colored coating on a surface of a product, not only the dispersion of the color additive must be considered, but also the binding force between the color additive and the adhesive substance in the coating and the adhesion of the colored coating to the substrate as a whole. The binding force between the color additive and the adhesive substance and the adhesion of colored coating to the substrate mainly depend on the adhesive substance in the sol other than the alcohol solvent, for example, the colloidal particle in the sol with an organic functional group attached to its surface. The greater the proportion of the color additive and the alcohol solvent, the smaller the content of the substance used for adhesive purposes. If the content of the substance used for adhesion is too low, the adhesion properties of the coating will deteriorate.

In the present application, the ratio of the sol and the color additive, and the content of the alcohol solvent in the sol are selected within the above range, the performance indicators of the colored coating formed by the composite material are comprehensively considered, for example, the coloring effect of the colored coating; compatibility and binding power of the sol and the color additive; adhesion of the colored coating to the substrate; thickness of coating; coating thickness, color and uniformity of unit weight, etc. As a result, it can ensure that the colors mixed with the composite material have a wide chromaticity range, and make the coating have excellent comprehensive properties and reduce the peeling of the pigment or coating part, thereby enabling the colored coating to color the product substrate firmly, durable and evenly.

In some embodiments, the sol further includes a water solvent, and the proportion of the water solvent in the sol is 10% to 40%. The alcohol solvent evaporates quickly when coating the composite material. In order to make the composite material have good coating performance on the surface of the substrate and prevent the problem of uneven coating surface caused by the solvent evaporating too quickly during the spraying process and the surface drying speed of the composite material being too quickly, the sol further includes water which evaporates slowly.

In some embodiments, the water solvent is derived from the sol, and/or the water solvent is a solvent additionally added. The water solvent derived from the sol means that at least part of the sol uses the water solvent during the preparation process, and/or the sol generates the water solvent through a chemical reaction or other types of reactions during the preparation process. After the preparation of the sol is completed, the water solvent remains at least partially in the sol. The water solvent is an additional solvent. For example, the water solvent can be mixed into the sol as long as it does not destroy the colloidal structure of the sol. In some embodiments, the sol includes a water-based sol. The water-based sol refers to a sol in which colloidal particles are dispersed in water.

In some embodiments, the proportion of the alcohol solvent in the sol is 20% to 26%, and the proportion of the water solvent in the sol is 30% to 36%. In some embodiments, the proportion of the alcohol solvent in the sol is 24%, and the proportion of the water solvent in the sol is 34%.

In some embodiments, the sol contains silica nanoparticles. A surface of at least part of the silica nanoparticles is combined with a functional group -(CH₂)₃-O-CH₂-CH-OCH₂ and a hydroxyl group -OH. The surface functional group -(CH₂)₃-O-CH₂-CH-OCH₂ enables the silica nanoparticles to be evenly dispersed in the sol. The silica nanoparticles in the resulting coating are also evenly dispersed, improving coating uniformity and consistency. The hydroxyl group - OH makes the silica nanoparticles hydrophilic, thus making the colored coating hydrophilic. This makes the water on the coating surface easy to discharge, reduces the accumulation of large amounts of water on the coating surface, and reduces the erosion of the coating by impurities in the water, so that the coating can maintain strong adhesion to the substrate for a long time. In some embodiments, at least some of the silica nanoparticles have a particle size of 55 nm to 65 nm. In some embodiments, the sol includes an alcohol-based sol containing the silica nanoparticles. The surfaces of the silica nanoparticles are combined with the functional group - (CH₂)₃-O-CH₂-CH-OCH₂ and the hydroxyl group -OH. The alcohol-based sol refers to colloidal particles dispersed in the alcohol solvent.

In some embodiments, the sol contains titanium dioxide nanoparticles. The addition of the titanium dioxide nanoparticles causes silica and titanium dioxide to form a binary oxide system in the sol. The interaction and substitution of titanium and silicon atoms in different coordination states can stabilize the Ti-O and Si-O structures, thereby enhancing the sol adhesion and improving the hydrophilic properties of the coating. In some embodiments, at least some of the titanium dioxide nanoparticles have a particle size of 5 nm to 10 nm.

In some embodiments, the color additive is selected from at least one of organic pigments, inorganic pigments and dyes. In some embodiments, a color additive is selected from at least one of C₁₈H₁₀Cₗ₂N₂O₂, C₃₂Cₗ₁₆CuN₈, C₃₂H₁₆CuN₈, C₃₅H₂₃Cₗ₂N₃O₂, C₁₂H₁₀N₆O₄, C₁₇H₁₃CaCₗN₄O₇S₂, and a mixture of mica, titanium dioxide, tin dioxide and ferric oxide. In other words, the color additive can be selected from any one of C₁₈H₁₀C₁₂N₂O₂ (red), C₃₂Cₗ₁₆CuN₈ (green), C₃₂H₁₆CuN₈ (blue), C₃₅H₂₃Cₗ₂N₃O₂ (purple), C₁₂H₁₀N₆O₄ (orange), C₁₇H₁₃CaCₗN₄O₇S₂ (yellow), or the mixture (gold color) of the mica, the titanium dioxide, the tin dioxide and the ferric oxide; or a mixture of any two or more in any proportion. In the actual coloring process, the demand for the color of the colored coating may be diverse. The formulation of some colors may require only one organic pigment, inorganic pigment or dye, while the formulation of other colors may require more than two organic pigments, more than two inorganic pigments or more than two dyes, or a combination of the organic pigments, the inorganic pigments and the dyes. The selection of color additive shall be based on the ability to mix with the sol to produce the required color.

In a fifth aspect of the present application, it provides a preparation method of a composite material. The preparation method includes: in terms of parts by mass, mixing 90 to 99 parts of a sol and 1 to 10 parts of a color additive; wherein the sol comprises an alcohol solvent and a proportion of the alcohol solvent in the sol is 15% to 30%.

The preparation method of the present application uses a sol with an appropriate alcohol solvent ratio, and mixes the sol and the color additive in an appropriate ratio, so that the color additive is evenly dispersed in the sol. The agglomeration of the color additive is reduced, allowing the preparation of the composite material with excellent coating properties. The composite material is capable of forming a colored coating with good consistency in film thickness, color and adhesion, strong adhesion and good durability, thereby reducing the risk of some color additive or coating peeling off from the substrate due to weak bonding or adhesion caused by the agglomeration of a pigment additive.

It should be understood that the preparation method of this composite material is based on the same inventive concept as the aforementioned composite material. Regarding the raw material composition and ratio of the composite material and other related characteristics, please refer to the aforementioned description of the composite material and will not be repeated here.

The method of mixing the above-mentioned sol and the color additive includes but is not limited to mechanical mixing. In other embodiments, various common mixing methods well known in the art can also be used, such as ultrasonic mixing or a combination of mechanical mixing and ultrasonic mixing. The embodiments of the present application do not place special restrictions on this, as long as the sol can be mixed evenly with the color additive.

In some specific embodiments, the preparation method of the composite material includes: mechanically mixing the sol and the color additive for 10 minutes to 30 minutes. In the present application, the sol and the color additive can be mechanically mixed for 10 minutes, 12 minutes, 15 minutes and 30 minutes, subject to the uniform mixing of the sol and the color additive.

In some embodiments, the preparation method of the composite material further includes: sanding or grinding after mixing the sol and the color additive.

Sanding or grinding can make the pigment additive have a smaller particle size, resulting in a finer, more uniform color in the colored coating. After mixing the sol and the color additive, the method of refining the particle size of the color additive is not limited to sanding or grinding, and other methods used in laboratories or industries that can be used to refine the particle size of the color additive can also be used. For sanding or grinding, generally speaking, the longer the sanding or grinding time, the smaller the particle size of the color additive, and the more uniform and fine the colored coating will be. However, considering the cost, it is okay as long as the particle size of the color additive can meet the usage requirements.

In some specific embodiments, the preparation method of the composite material includes: after mixing the sol and the color additive, sanding with a sand mill for 10 minutes to 60 minutes. In the present application, specifically, the sanding or grinding time can be set to 10 minutes, 11 minutes, 15 minutes, 20 minutes, 30 minutes, 45 minutes, 60 minutes and any value in a range formed by any two of these point values.

According to the embodiments of the present application, there are no special restrictions on the sources of the sol and the color additive, which can be prepared by oneself or commercially available products can be used. In other embodiments, at least one of the color additive and the sol is commercially available. The embodiments of the present application also do not limit the preparation order of the color additive and the sol. For example, in the preparation process of the composite material, the color additive can be prepared first and then the sol; or the sol can also be prepared first and then the color additive; or the color additive and sol can be prepared simultaneously.

In some embodiments of the present application, the sol in the composite material is prepared by oneself. The preparation method of the sol is explained below.

In some embodiments, the preparation method of the composite material further includes preparing alcohol-based silica sol. The alcohol-based silica sol includes silica nanoparticles dispersed in an alcohol solvent. The surfaces of the silica nanoparticles are combined with the functional group -(CH₂)₃-O-CH₂-CH-OCH₂ and the hydroxyl group -OH. The preparation method of the alcohol-based silica sol includes: mixing silane precursor, an alcohol solvent, a surfactant, water and a pH adjuster, and performing a water bath reaction to obtain the alcohol-based silica sol.

In some embodiments, the preparation method of the alcohol-based silica sol includes: in terms of parts by mass, mixing 36 to 40 parts of the silane precursor, 50 to 56 parts of the alcohol solvent, 0.5 to 1.5 parts of the surfactant, 5 to 7 parts of the water and 0.5 to 2 parts of the pH adjuster, and performing a water bath reaction to obtain the alcohol-based silica sol. At least part of the silane precursor contains the functional group -(CH₂)₃-O-CH₂-CH-OCH₂. Illustratively, the mass parts of the silane precursor may be, for example, 36 parts, 37 parts, 38 parts, 39 parts, 40 parts, etc. The mass parts of the alcohol solvent may be, for example, 50 parts, 51 parts, 52 parts, 53 parts, 54 parts, 55 parts, 56 parts, etc. The mass part of the surfactant may be, for example, 0.5 part, 0.8 part, 1 part, 1.2 part, 1.5 part, etc. The mass part of the water may be, for example, 5 parts, 5.5 parts, 6.5 parts, 7 parts, etc. The mass parts of the pH adjuster may be, for example, 0.5 parts, 1 part, 1.2 parts, 1.5 parts, 1.6 parts, 1.8 parts, 2 parts, etc. In some embodiments, the mixing temperature is 45°C to 55°C. Illustratively, the mixing temperature is 45°C, 46°C, 48°C, 50°C, 52°C, 54°C, 55°C, etc.

In some embodiments, the silane precursor includes glycidoxypropyltrimethoxysilane (KH-560 for short) and ethyl orthosilicate. In this way, the surface of the silica nanoparticle contained in the prepared sol is combined with the functional group -(CH₂)₃-O-CH₂-CH-OCH₂ and the hydroxyl group -OH. In other embodiments, other types of silane precursors may be used.

In some embodiments, the silane precursor includes 30 to 32 parts of γ-glycidoxypropyltrimethoxysilane (KH-560 for short) and 6 to 8 parts of ethyl orthosilicate. Illustratively, the mass parts of KH-560 may be, for example, 30 parts, 31 parts, 32 parts, etc.; and the mass parts of ethyl orthosilicate may be, for example, 6 parts, 7 parts, 8 parts, etc.

In some embodiments, the alcohol solvent includes an alcohol solvent with 1 to 10 carbon atoms, preferably an alcohol solvent with 1 to 8 carbon atoms, and more preferably an alcohol solvent with 1 to 4 carbon atoms. Further, in some embodiments, the solvent is any one of methanol, ethanol, isopropyl alcohol, benzyl alcohol and ethylene glycol, or a mixture of any two or more in any proportion. As a result, the sources are wide, easy to obtain, and the cost is low.

In some embodiments, the surfactant includes, but is not limited to, at least one of sodium lauryl sulfate, sodium dodecyl sulfonate, sodium dodecyl benzene sulfonate, and cetyl benzene sulfonic acid. Furthermore, in some embodiments, the surfactant is the sodium lauryl sulfate. As a result, the cost is low, the sources are wide, and the use effect is good.

In some embodiments, the pH adjuster includes an organic acid or an inorganic acid. In some embodiments, the pH adjuster includes, but is not limited to, at least one of formic acid and acetic acid. Furthermore, in some embodiments, the pH adjuster is the formic acid.

The equation or reaction principles involved in the alcohol-based silica sol prepared in the present application can be as follows:
1) Hydrolysis and condensation of ethyl orthosilicate: Si(OCH₂CH₃)₄+ 2H₂O→SiO₂ + 4C₂H₅OH;
2) KH560 hydrolysis: R-Si(OCH₃)₃ + 3H₂O → R-Si(OH)₃ + CH₃OH;
   KH560 polycondensation: R-Si(OH)₃+ R-Si(OH)₃ → R-Si(OH)₂-O-Si(OH)₂-R + H₂O;
   R-Si(OH)₃ + R-Si(OCH₃)₃ → R-Si(OH)₂-O-Si(OH)₂-R + CH₃OH;
   wherein R represents a long-chain group -(CH₂)₃-O-CH₂-CH-OCH₂ in KH560, and KH560 has the following structural formula (I): 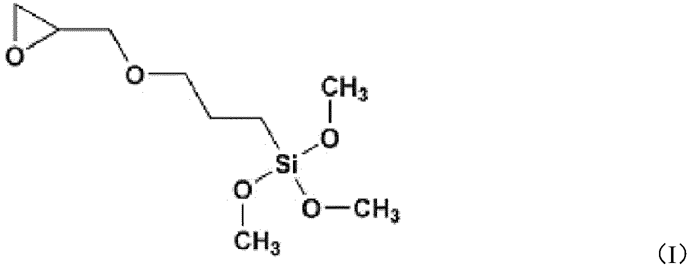
3) Condensation of KH560 and silanol: R-Si(OH)₃ + Si(OH)₄ → R-Si(OH)₂-O-Si(OH)₃ + H₂O.

The silica nanoparticle in the sol prepared in the present application is synthesized in situ. The surface of the silica nanoparticle is combined with the functional group -(CH₂)₃-O-CH₂-CH-OCH₂, which makes the silica nanoparticles in the coating formed by the composite material evenly distributed, thereby improving the uniformity and consistency of the coating. The alcohol-based silica sol prepared in the present application is capable of forming a film alone on the surface of the substrate. Since the surface of silica nanoparticle contains a large number of hydroxyl (-OH) hydrophilic groups, dehydration and condensation between hydroxyl groups forms a spatial network structure. Since the silica sol is an alcohol-based sol prepared by the alcoholic solvent, the alcoholic solvent in it can disperse the color additive evenly. During the formation of the colored coating on the composite material, the silica sol is dehydrated and condensed, which can evenly adhere the color additive and the silica nanoparticle itself to the surface of the substrate, so as to form a colored coating with strong adhesion, thick film, uniform color and good durability. In addition, the hydroxyl group on the surface of the silica nanoparticle make the coating hydrophilic, which enhances the drainage effect of the colored coating, reduces the erosion of the coating by external water or impurities in the air, and further improves the durability of the colored coating.

In some embodiments, the preparation method of the alcohol-based silica sol includes: in terms of parts by mass, weighing 50 to 56 parts of the alcoholic solvent and 0.5 to 1.5 parts of the surfactant, and dispersing ultrasonically; adding 36 to 40 parts of the silane precursor and mixing in a water bath; adding 5 to 7 parts of water and 0.5 to 2 parts of a pH adjuster dropwise, and reacting in a water bath to obtain the alcohol-based silica sol. At least part of the silane precursor contains the functional group -(CH₂)₃-O-CH₂-CH-OCH₂. The alcohol-based silica sol prepared in the embodiment of the present application has good compatibility with the color additive. The color additive can be well dispersed in it and the preparation process is simple.

In some embodiments, the preparation method of the sol includes: in terms of parts by mass, weighing 50 to 56 parts of the alcoholic solvent and 0.5 to 1.5 parts of the surfactant, and dispersing ultrasonically for 5 minutes to 15 minutes; adding 36 to 40 parts of the silane precursor, mixing in a water bath at 40°C to 60°C for 20 minutes to 40 minutes, and stirring at a speed of 200 rpm to 300 rpm; adding 5 to 7 parts of water and 0.5 to 2 parts of a pH adjuster dropwise, controlling the dropwise addition to be completed in 5 minutes to 15 minutes, and reacting in a water bath for 22 hours to 26 hours to obtain the alcohol-based silica sol, wherein at least part of the silane precursor contains the functional group -(CH₂)₃-O-CH₂-CH-OCH₂.

In some embodiments, the preparation method of the sol further includes adding fillers to the sol.

Adding the fillers to the sol can increase the viscosity, reduce the permeability of the coating, and improve the durability of the coating. Typically, powdered fillers are mixed into the coating to improve the coating's properties such as adhesion, durability, etc. However, the dispersion of the powder in the sol is not good, which can easily lead to poor uniformity of the coating, and increase the possibility of partial peeling of the fillers or the color additive in the coating.

In the present application, the fillers are added to the sol through sol mixing. On the one hand, it is beneficial to the uniform dispersion of the fillers; and on the other hand, since the fillers are prepared by the sol-gel method and have functional groups attached to their surfaces, compared to dry powder fillers, after the coating is formed, their adhesion to the substrate is also stronger. In some embodiments, the preparation method of the sol includes: mixing the water-based silica sol and the titanium dioxide sol with the alcohol-based silica sol prepared above, wherein a mixed solid content of the water-based silica sol and the titanium dioxide sol is greater than a solid content of the alcohol-based silica sol. The mixed solid content of the water-based silica sol and the titanium dioxide sol refers to a solid content of a mixed sol obtained by mixing the water-based silica sol and the titanium dioxide sol. For example, the solid content of the water-based silica sol is x₁%, and its proportion in the mixed sol is y₁%; the solid content of the titanium dioxide sol is x₂%, and its proportion in the mixed sol is y₂%; the sum of y₁% and y₂% is 1; then the mixed solid content is x₁%·y₁%+ x₂%·y₂%. The silica in the water-based silica sol and the titanium dioxide in the titanium dioxide sol are used as the fillers and are added to the alcohol-based silica sol through sol mixing. The water solvent in the water-based silica sol can increase the coating performance of the composite material and prevent the uneven coating surface caused by the solvent evaporating too quickly during the spraying process and the composite material drying out too quickly.

In some embodiments, the particle size of the silica nanoparticles in the water-based silica sol is 55nm to 65 nm, and the solid content is 45% to 55%. In some embodiments, the particle size of the silica nanoparticles in the alcohol-based silica sol is smaller than the particle size of the silica nanoparticles in the water-based silica sol. In some embodiments, the particle size of the silica nanoparticles in the silica sol is 60 nm, and the solid content is 50%. In some embodiments, the water-based silica sol has a pH value of 9.

In some embodiments, the particle size of the silica nanoparticles in the titanium dioxide sol is 5 nm to 10 nm, and the solid content is 2% to 4%.

In some embodiments, the titanium dioxide sol is a water-based sol or an alcohol-based sol.

In some embodiments, the preparation method of the sol includes: mixing the alcohol-based silica sol, the water-based silica sol and the titanium dioxide sol, adjusting the pH to acidic with a pH adjuster, and stirring in a water bath. The pH adjuster includes ab organic acid or an inorganic acid. Specifically, in some embodiments, the pH adjuster is a formic acid. In this way, the prepared mixed sol has good uniformity, and both the silica nanoparticles and the titanium dioxide nanoparticles can be evenly dispersed in the sol.

In some embodiments, the preparation method of the sol includes: weighing the water-based silica sol, the alcohol-based silica sol and the titanium dioxide sol, adjusting the pH value to 3.0 to 4.0 with the pH adjuster, and stirring in the water bath at 40°C to 60°C for 3 hours to 5 hours.

In some embodiments, the preparation method of the sol includes: weighing 34 to 36 parts of the alcohol-based silica sol, 55 to 57 parts of the water-based silica sol, and 4 to 6 parts of the titanium dioxide sol, using 3 to 5 parts of the pH adjuster to adjust the pH value to 3.0 to 4.0, and stirring in a 40°C to 60°C water bath for 3 hours to 5 hours. According to the embodiment of the present application, the mass parts of the alcohol-based sol are 34 to 36 parts, for example, typical but non-limiting examples may be 34 parts, 34.5 parts, 34.8 parts, 35 parts, 35.5 parts, 36 parts and any value in a range formed by any two of these point values. According to the embodiment of the present application, the mass parts of the silica sol are 55 to 57 parts, for example, typical but non-limiting examples may be 55.5 parts, 56 parts, 56.5 parts, 57 parts and any value in a range formed by any two of these point values. According to the embodiments of the present application, the mass parts of the titanium dioxide sol are 4 to 6 parts, for example, typical but not limiting examples may be 4 parts, 4.5 parts, 5 parts, 5.5 parts and any value in a range formed by any two of these point values. Choosing the ratio of the alcohol-based silica sol, the water-based silica sol and the titanium dioxide sol within this range is a comprehensive consideration of the dispersion of the pigment additive and the fillers in the composite material in the sol, the binding force between the pigment additive and fillers in the colored coating and the substrate, as well as the density, uniformity and other properties of the coating. The resulting coating has even distribution of the pigment additive and the fillers, good uniformity and strong adhesion.

In order to fully explain the relevant properties of the composite material provided by the present application and facilitate understanding of the present invention, the present application has conducted multiple sets of experimental verifications. The present invention will be further described below in conjunction with specific embodiments and comparative examples. Those skilled in the art will understand that the examples described in the present application are only some examples, and any other suitable specific examples are within the scope of the present application.

### First Embodiment

### 1. Preparation of a composite material

In this embodiment, a sol includes an alcohol-based silica sol, a water-based silica sol and a titanium dioxide sol. The alcohol-based silica sol is prepared by oneself and looks like a transparent sol in appearance. The content of an absolute ethanol in the alcohol-based silica sol is approximately 54%. The water-based silica sol and the titanium dioxide sol are both commercially available products. The titanium dioxide sol is also a water-based sol. Among them, a particle size of colloidal particles in the water-based silica sol is 55 nm to 65 nm, a solid content is about 50%, and a pH value is 9. A particle size of the colloidal particles in the titanium dioxide sol is 5 nm to 10 nm, and a solid content of the titanium dioxide sol is about 3%. The color additive is commercially available Pigment Red 254, and its chemical composition is C₁₈H₁₀Cₗ₂N₂O₂.

### A) Preparation of sol

### (a1) Preparation of alcohol-based sol

The alcohol-based sol refers to a sol in which colloidal particles are dispersed in an alcohol solvent. In terms of parts by mass, the preparation includes: dispersing ultrasonically of 54 parts of the absolute ethanol and 1 part of sodium lauryl sulfate for 10 minutes; then adding 31 parts of KH-560 and 7 parts of ethyl orthosilicate, and stirring mechanically for 30 minutes in a water bath at 50°C at a stirring speed of 250 rpm; then adding 6 parts of water and 1 part of formic acid dropwise into the system, controlling the dropwise addition to be completed in 10 minutes, and reacting in a 50°C water bath for 24 hours to obtain the alcohol-based silica sol. The surface of the silica nanoparticles contained in the alcohol-based silica sol is combined with the functional group -(CH₂)₃-O-CH₂-CH-OCH₂ and the hydroxyl group -OH.

### (a2) Mixing alcohol-based sol and water-based sol

Mixing 35 parts of the alcohol-based silica sol prepared in step (a1), 56 parts of the water-based silica sol and 5 parts of the water-based titanium dioxide sol; using 4 parts of the pH adjuster, which is formic acid, to adjust the pH value of the system to about 3.0; and stirring and reacting in a water bath at about 50°C for about 4 hours to obtain a sol. After mixing, the proportion of the absolute ethanol in the mixed sol is approximately 24%, of which the proportion of the absolute ethanol added during the preparation of the alcohol-based sol is 18.9%.

### B) Mixing the sol with color additive

In terms of parts by mass, 95 parts of the sol and 5 parts of the red pigment are mechanically mixed for 20 minutes, and sanded with a sand mill for 30 minutes to obtain a composite material.

### 2. Preparation of heat exchanger

Pretreatment of a substrate surface of the heat exchanger to be coated. Specifically, it includes: 150-mesh sandblasting treatment on the substrate surface of the heat exchanger, then spraying cleaning of the heat exchange tube and/or fin surface with absolute ethanol, and drying it at 40°C for later use.

Spray the composite material obtained in the above step 1 on the substrate surface of the pretreated heat exchanger, and cure it at 200°C for 30 minutes to obtain a heat exchanger with a red coating.

### Second to Seventh Embodiments

The composite material and heat exchanger are prepared in the same manner as in the first embodiment. The differences are the type of color additive and/or the proportion of sol and color additive.

In the second embodiment, 95 parts of sol and 5 parts of Pigment Green 7 are mixed, and the main chemical composition of Pigment Green 7 is C₃₂Cₗ₁₆CuN₈.

In the third embodiment, 95 parts of sol and 5 parts of Pigment Blue 15:3 are mixed, and the main chemical composition of Pigment Blue 15:3 is C₃₂H₁₆CuN₈.

In the fourth embodiment, 95 parts of sol and 5 parts of Pigment Violet 23 are mixed, and the main chemical composition of Pigment Violet 23 is C₃₅H₂₃Cl₂N₃O₂.

In the fifth embodiment, 92 parts of sol and 8 parts of golden pigment are mixed, wherein the golden pigment is a mixture of mica, titanium dioxide, tin dioxide, and ferric oxide.

In the sixth embodiment, 90 parts of sol and 10 parts of Pigment Orange 64 are mixed, and the main chemical composition of Pigment Orange 64 is C₁₂H₁₀N₆O₄.

In the seventh embodiment, 90 parts of sol and 10 parts of Pigment Yellow 191 are mixed, and the main chemical composition of Pigment Yellow 191 is C₁₇H₁₃CaCₗN₄O₇S₂.

### Eighth and Ninth Embodiments

The composite material and the heat exchanger are prepared in the same manner as in the first embodiment. The differences are the ratio of sol to red pigment and the curing time of the composite material.

In the eighth embodiment, the composite material contains 90 parts of sol and 10 parts of Pigment Red 254. The composite material is sprayed on the surface of the pretreated heat exchanger, and after curing at 180°C for 60 minutes, a heat exchanger with a colored coating is obtained.

In the ninth embodiment, the composite material contains 99 parts of sol and 1 part of Pigment Red 254. The composite material is sprayed on the surface of the pretreated heat exchanger, and after curing at 220°C for 10 minutes, a heat exchanger with a colored coating is obtained.

The rest is the same as in the first embodiment.

### Tenth and Eleventh Embodiments

The composite material and the heat exchanger are prepared in the same manner as in the first embodiment, except for: (a1) preparation of alcohol-based sol.

In the tenth embodiment, the differences from the first embodiment are that: in step (a1), in terms of parts by mass, 56 parts of absolute ethanol and 1.5 parts of sodium dodecyl sulfate are mixed and dispersed ultrasonically for 15 minutes; then 32 parts of KH-560 and 8 parts of ethyl orthosilicate are added, and mechanical stirring is performed in a water bath at 55°C for 40 minutes with a stirring speed of 300 rpm; then 7 parts of water and 2 parts of formic acid are added dropwise to the system, the dropwise addition is controlled to be completed in 15 minutes, and a reaction is performed in a 55°C water bath for about 26 hours to obtain the alcohol-based silica sol. The rest is the same as in the first embodiment.

In the eleventh embodiment, the differences from the first embodiment are that: in step (a1), in terms of parts by mass, 50 parts of absolute ethanol and 0.5 parts of sodium dodecyl sulfate are mixed and dispersed ultrasonically for 5 minutes; then 30 parts of KH-560 and 6 parts of ethyl orthosilicate are added, and mechanical stirring is performed for 20 minutes in a water bath at 45°C with a stirring speed of 200 rpm; then 5 parts of water and 0.5 parts of formic acid are added dropwise into the system, the dropwise addition is controlled to be completed in 5 minutes, and a reaction is performed in a 45°C water bath for about 22 hours to obtain the alcohol-based silica sol. The rest is the same as in the first embodiment.

### Twelfth and Thirteenth Embodiments

The composite material and the heat exchanger are prepared in the same manner as in the first embodiment, except for: (a2) the proportion of the alcohol-based sol and the water-based sol in the mixing of the alcohol-based sol and the water-based sol.

In the twelfth embodiment, the differences from the first embodiment are that: in step (a2), 36 parts of the alcohol-based silica sol prepared in step (a1), 57 parts of the water-based silica sol and 6 parts of the water-based titanium dioxide sol are mixed evenly; 5 parts of a pH adjuster, which is formic acid, are used to adjust the pH value of the system to about 3.0; and stirring reaction is performed in a water bath at 55°C for about 5 hours to obtain a sol. The rest is the same as in the first embodiment.

In the thirteenth embodiment, the differences from the tenth embodiment are that: in step (a2), 34 parts of the alcohol-based silica sol prepared in step (a1), 55 parts of the water-based silica sol and 4 parts of the water-based titanium dioxide sol are mixed evenly; 3 parts of a pH adjuster, which is formic acid, are used to adjust the pH value of the system to about 3.0; and stirring reaction is performed in a water bath at 45°C for about 5 hours to obtain a sol. The rest is the same as in the first embodiment.

### First Comparative Example

The differences between the first comparative example and the first embodiment are that: the substrate surface of the heat exchange tube and/or fin of the heat exchanger in first comparative example has been sandblasted with 150 mesh, absolute ethanol is used to spray cleaning of the surface of the heat exchange tube and/or the fin of the heat exchanger, and dry the surface. And, the surface of the heat exchanger in the first comparative example is not provided with a colored coating formed of a composite material.

### Performance Testing

### 1. Adhesion test

The test samples of the first embodiment to the thirteenth embodiment are subjected to a cross-cut test. The cross-cut test is to cut and penetrate the coating on the substrate in a grid pattern. The completed pattern is classified into six levels to evaluate the resistance of the coating to separation from the substrate.

### ISO levels of cross-cut test:

Level 0: Edges of incisions are completely smooth and there is no peeling on the edges of the grid;
Level 1: There are small pieces peeling off at the intersection of the incisions, and the actual damage in the cross-hatch area does not exceed 5%;
Level 2: Edges and/or intersections of the incisions are peeled off, and the peeled area is 5% to 15% of the cross-section area;
Level 3: There is partial or complete peeling off along the edges of the incisions, and/or part of the grid is peeled off entirely, and the peeled area is 15% to 35% of the grid area;
Level 4: Edges of the incisions are peeled off in large areas/or some squares are partially or completely peeled off, and the peeled area is 35% to 65% of the cross-section area;
Level 5: Beyond the previous levels.

The ISO level of the cross-cut test of the test samples of first embodiment to the thirteenth embodiment are all Level 0. It can be seen that the colored coating of the present application has strong adhesion to the substrate.

### 2. Coating thickness test

The coating thickness of the first embodiment to the seventh embodiment is tested using a high-precision graph coating thickness gauge, and the results are shown in Table 2.

**Table 2**

| | first embodiment | second embodiment | third embodiment | fourth embodiment | fifth embodiment | sixth embodiment | seventh embodiment |
|---|---|---|---|---|---|---|---|
| thickness (µm) | 11.9 | 14.0 | 15.7 | 14.3 | 15.0 | 8.1 | 10.1 |

From the results in Table 2, it can be seen that the thickness of the colored coating formed by curing on the surface of the heat exchanger is in the range of 8µm to 16 µm, and the thinner colored coating has less impact on the heat exchange efficiency of the heat exchanger.

The present application also conducts a film thickness uniformity test on the colored coating on the surface of the heat exchanger prepared in the first embodiment and the fifth embodiment. The specific test method is to randomly select ten test points on the surface of the heat exchanger with the colored coating, and conduct film thickness tests respectively.

The thicknesses of the red coating measured at the surface test points of the heat exchanger in the first embodiment are: 11.2 µm, 10.2 µm, 10.1 µm, 11.8 µm, 10.4 µm, 9.6 µm, 10.5 µm, 9.4 µm, 9.7 µm, 9.5 µm, and 10.2 µm. The average film thickness is 10.2 µm, and the standard deviation is 0.736 µm.

The thicknesses of the golden coating measured at the surface test points of the heat exchanger in the fifth embodiment are: 11.8 µm, 12.0 µm, 11.3 µm, 11.1 µm, 12.8 µm, 12.1 µm, 12.8 µm, 11.2 µm, 10.3 µm, 12.6µm, and 11.8µm. The average film thickness is 11.8 µm, and the standard deviation is 0.782 µm.

It can be seen from the above test results that since the color additive and fillers in the composite material of the present application are evenly distributed in the coating, the thickness of the colored coating on the surface of the heat exchanger has good consistency, strong adhesion and good consistency.

### 3. Hydrophilic performance test (contact angle test)

The testing instrument used is a contact angle measuring instrument, which adopts the principle of optical imaging and uses image profile analysis to measure the sample contact angle. The contact angle refers to an angle formed by two tangent lines of a gas-liquid interface and a solid-liquid interface sandwiching the liquid phase therebetween, at a junction point of a solid-liquid-gas three-phase on a solid surface, when a drop of liquid is placed on a solid horizontal plane.

When testing, the contact angle measuring instrument and the computer connected thereto are opened, and the testing software is opened.

A sample is placed on a horizontal workbench and a micro-sampler is used to adjust the amount of a droplet. The volume of the droplet is generally about 1 µL. The droplet form a droplet on a needle. A knob is rotated to move the workbench so that the sample surface is in contact with the droplet. The workbench is then moved downwardly, and the droplet will be left on the sample.

The contact angle in this area is obtained by conducting testing and data analysis through the testing software. The samples of each embodiment and the comparative example are tested at 5 different points, and the average value is recorded as the contact angle of the sample of this embodiment and the comparative example.

The above contact angle test results show that initial contact angles of the sample surfaces of the first embodiment to the thirteenth embodiment are all smaller than the initial contact angle of the sample surface of the first comparative example, which is 39.114°. As a result, it shows that the hydrophilic particles contained in the coating of the present application, such as silica and titanium dioxide, increase the hydrophilicity of the substrate surface, are beneficial to the discharge of condensed water, making it difficult for the sample surface to form a humid water environment.

In the description of the present application, reference to the description of the terms, such as "an embodiment", "some embodiments", "illustrative embodiment", "example", "specific example", or "some examples", means that a particular feature, structure, material, or characteristic described in connection with that embodiment or example is included in at least one embodiment or example of the present application. In this specification, schematic representations of the above terms do not necessarily refer to the same embodiment or example. Furthermore, the specific features, structures, materials or characteristics described may be combined in any suitable manner in any one or more embodiments or examples. The directional words, such as "upper", "lower", "inner" and "outer", described in the embodiments of the present application are described from the perspective shown in the drawings and should not be understood as limiting the embodiments of the present application.

Although the embodiments of the present application have been shown and described, it is understandable to those of ordinary skill in the art that various changes, modifications, substitutions and variations can be made to these embodiments without departing from the principles and purposes of the present application, and the scope of the present application is defined by the claims and their equivalents.

## Claims

1. A heat exchanger, comprising: a channel for fluid circulation, at least part of a surface of the heat exchanger being covered with a colored coating, the colored coating comprising a color additive which is selected from at least one of an organic pigment, an inorganic pigment and a dye.

2. The heat exchanger according to claim 1, wherein the color additive is selected from at least one of C₁₈H₁₀Cₗ₂N₂O₂, C₃₂Cₗ₁₆CuN₈, C₃₂H₁₆CuN₈, C₃₅H₂₃Cₗ₂N₃O₂, C₁₂H₁₀N₆O₄, C₁₇H₁₃CaCₗN₄O₇S₂, and a mixture of mica, titanium dioxide, tin dioxide and ferric oxide.

3. The heat exchanger according to claim 1, wherein the colored coating comprises silica and titanium dioxide, and wherein a surface of at least part of the silica is combined with a functional group -(CH₂)₃-O-CH₂-CH-OCH₂ and a hydroxyl group -OH.

4. The heat exchanger according to claim 1, wherein a thickness of the colored coating is within a range of 8 µm to 16 µm;
the heat exchanger is one of a micro-channel heat exchanger, a plate heat exchanger, and a shell and tube heat exchanger.

5. The heat exchanger according to claim 1, wherein the colored coating comprises a first colored coating and a second colored coating; the first colored coating and the second colored coating respectively cover different positions on the surface of the heat exchanger; the first colored coating and the second colored coating have different colors.

6. The heat exchanger according to any one of claims 1 to 5, wherein the heat exchanger comprises a collecting pipe, a fin and a plurality of heat exchange tubes; the heat exchange tubes are fixed to the collecting pipe; an inner cavity of the heat exchange tube is in communication with an inner cavity of the collecting pipe; the fin is located between two adjacent heat exchange tubes; and
the colored coating covers at least part of a surface of at least one of the collecting pipe, the fin and the heat exchange tubes.

7. The heat exchanger according to claim 6, wherein the colored coating covering at least part of the surface of at least one of the collecting pipe, the fin and the heat exchange tubes has an average thickness; a thickness of at least part of the colored coating covering at least part of the surface of the fin is less than the average thickness; and/or,
a thickness of at least part of the colored coating covering at least part of the surface of the heat exchange tubes is less than the average thickness.

8. The heat exchanger according to claim 7, wherein the channel of the heat exchanger comprises an external channel for external fluid circulation; the heat exchange tube has an inner side for forming the external channel; the inner side has an edge area and a middle area; the external channel has a fluid inlet and a fluid outlet; the edge area comprises a first edge area closer to the fluid inlet relative to the middle area and a second edge area closer to the fluid outlet relative to the middle area; the middle area is located between the first edge area and the second edge area; a thickness of the colored coating covering the first edge area and the second edge area is greater than or equal to a thickness of the colored coating covering the middle area; and/or,
the fin has an inner surface for forming the external channel; the inner surface has an outer edge area and a central area; the external channel has a fluid inlet and a fluid outlet; the outer edge area comprises a first outer edge area closer to the fluid inlet relative to the central area and a second outer edge area closer to the fluid outlet relative to the central area; the central area is located between the first outer edge area and the second outer edge area; a thickness of the colored coating covering the first outer edge area and the second outer edge area is greater than or equal to a thickness of the colored coating covering the central area.

9. A thermal management system, comprising: a compressor, a first heat exchanger, a throttling device and a second heat exchanger; a color of at least part of a surface of the first heat exchanger is different from a color of at least part of a surface of the second heat exchanger; wherein when a refrigerant flows in the thermal management system, the refrigerant is compressed by the compressor and then flows into the first heat exchanger, the refrigerant flows into the throttling device after exchanging heat in the first heat exchanger, the refrigerant then flows into the second heat exchanger, and then flows into the compressor again after exchanging heat in the second heat exchanger.

10. The thermal management system according to claim 9, wherein at least part of a surface of one of the first heat exchanger and the second heat exchanger is covered with a colored coating; a color of the colored coating is different from a color of a substrate of the first heat exchanger and is also different from a color of a substrate of the second heat exchanger; or,
at least part of a surface of the first heat exchanger is covered with a third colored coating; at least part of a surface of the second heat exchanger is covered with a fourth colored coating; the third colored coating and the fourth colored coating have different colors.

11. A composite material, comprising: 90 to 99 parts by mass of a sol and 1 to 10 parts by mass of a color additive; the sol comprising an alcoholic solvent; and a proportion of the alcohol solvent in the sol being 15% to 30%.

12. The composite material according to claim 11, wherein the sol further comprises a water solvent, and a proportion of the water solvent in the sol is 10% to 40%.

13. The composite material according to claim 11, wherein the alcohol solvent is any one of methanol, ethanol, isopropyl alcohol, benzyl alcohol and ethylene glycol; or a mixture of any two or more of the methanol, the ethanol, the isopropyl alcohol, the benzyl alcohol and the ethylene glycol in any proportion.

14. The composite material according to claim 11, wherein the color additive is selected from at least one of an organic pigment, an inorganic pigment and a dye.

15. The composite material according to claim 11, wherein the sol contains silica nanoparticles, and a surface of at least part of the silica nanoparticles is combined with a functional group -(CH₂)₃-O-CH₂-CH-OCH₂ and a hydroxyl group -OH; and/or,
the sol contains titanium dioxide nanoparticles.

16. A preparation method of a composite material, comprising: mixing 90 to 99 parts by mass of a sol and 1 to 10 parts by mass of a color additive; wherein the sol comprises an alcohol solvent and a proportion of the alcohol solvent in the sol is 15% to 30%.

17. The preparation method of the composite material according to claim 16, further comprising:
in terms of parts by mass, weighing 50 to 56 parts of the alcohol solvent and 0.5 to 1.5 parts of a surfactant, and dispersing them ultrasonically;
adding 36 to 40 parts of silane precursor and mixing in a water bath; and
adding 5 to 7 parts of water and 0.5 to 2 parts of a pH adjuster dropwise, and reacting in a water bath to obtain an alcohol-soluble silica sol, wherein at least part of the silane precursor contains a functional group -(CH₂)₃-O-CH₂-CH-OCH₂.

18. The preparation method of the composite material according to claim 17, further comprising:
mixing a water-soluble silica sol and a titanium dioxide sol with the alcohol-soluble silica sol, wherein a solid content of a mixture of the water-soluble silica sol and the titanium dioxide sol is greater than a solid content of the alcohol-soluble silica sol.

19. The preparation method of the composite material according to claim 18, wherein silica nanoparticles in the water-soluble silica sol have a particle size of 55 nm to 65 nm and a solid content of 45% to 55%; and/or, titanium dioxide nanoparticles in the titanium dioxide sol have a particle size of 5 nm to 10 nm and a solid content of 2% to 4%.

20. The preparation method of the composite material according to claim 18, further comprising:
weighing 34 to 36 parts of the alcohol-soluble silica sol, 55 to 57 parts of the water-soluble silica sol and 4 to 6 parts of the titanium dioxide sol, using 3 to 5 parts of a pH adjuster to adjust a pH value to 3.0 to 4.0, and stirring in a water bath of 40°C to 60°C for 3 hours to 5 hours.
